Europäisches Patentamt

(19) European Patent Office

Office européen des brevets

(11) Publication number : **0 322 442 B1**

# (12) EUROPEAN PATENT SPECIFICATION

(45) Date of publication of patent specification :
**25.03.92 Bulletin 92/13**

(51) Int. Cl.⁵ : **G07G 1/14**

(21) Application number : **88906284.0**

(22) Date of filing : **26.05.88**

(86) International application number :
**PCT/US88/01769**

(87) International publication number :
**WO 88/10480 29.12.88 Gazette 88/28**

(54) METHOD FOR PROCESSING DATA RELATING TO PURCHASED PRODUCTS.

(30) Priority : **18.06.87 US 63601**

(43) Date of publication of application :
**05.07.89 Bulletin 89/27**

(45) Publication of the grant of the patent :
**25.03.92 Bulletin 92/13**

(84) Designated Contracting States :
**DE FR GB**

(56) References cited :
**EP-A- 0 189 830**
**GB-A- 2 141 857**
**Patent Abstracts of Japan, vol. 4, no. 11**
**(E-168), 26. January 1980 & JP, A, 54152836**
**(TOKYO DENKI K.K.)**

(73) Proprietor : **NCR CORPORATION**
**World Headquarters**
**Dayton, Ohio 45479 (US)**

(72) Inventor : **GRULKE, James, Max, Jr.**
**703 Ceder Valley Trace**
**Lawrenceville, GA 30245 (US)**

(74) Representative : **Robinson, Robert George**
**International Patent Department NCR Limited**
**206 Marylebone Road**
**London NW1 6LY (GB)**

## Description

### Technical Field

The present invention relates to a method for processing data pertaining to a product purchased as part of a checkout operation, and more particularly to a method for identifying the price of a purchased product which is normally sold as a multiple-item package.

### Background Art

Merchandise items such as beer and non-alcoholic drinks are often sold in packages of 6, 8 or 12 bottles or cans. As part of a known merchandise checkout system utilizing an electronic cash register, a bar code (UPC) label is attached to a multi-item package containing data identifying the merchandise item but not the number of items contained in the package. During a checkout operation in respect of the package, the UPC label is read by an optical reader and the data obtained is used to access a price look-up table in a RAM memory or in a remotely located disc file to obtain the price of the merchandise item. In order to identify the price of the package, it is known (see JP-A-54152836) to use a selected one of a number of qualifier keys on the keyboard of the cash register as part of the checkout operation. The use of this type of key adds an additional data item to the UPC item code, thus giving the package a unique number which can be used to abstract the correct price which is dependent on the number of items in the package. One disadvantage of this known system is that the operator must recognize the need to use a qualifier key in connection with a checkout operation in respect of a multi-item package. Also, the number of qualifier keys provided on the keyboard are limited to the most popular size packages that are sold by the store. It has been found, for example, that in convenience stores, which are open twenty-four hours a day, the number of items in a multi-item package is frequently less than the number of items in the original package, so that the number of items actually contained in the package as purchased may not correspond to any of the numbers represented by the qualifier keys. Thus, this known system has the further disadvantage that for some checkout operations it may be necessary for the operator to look up the price for a single item and enter manually this price into the cash register, and repeat such single item transaction for each item of a purchased multi°item package.

### Disclosure of the Invention

It is an object of the invention to provide a method for processing data relating to purchased products in which the disadvantages referred to above are alleviated.

According to the invention there is provided a method for processing data relating to purchased products utilizing an operator actuated electronic cash register having a keyboard and a display, and utilizing a price look-up file in which are stored a plurality of data blocks each containing information relating to the price of a respective product, said data blocks being accessed in operation for the purpose of obtaining the price of a purchased product and displaying this price on said display, characterized in that each of said data blocks includes or consists of a first data record in which are included a first data item which is the same for all the first data records, and a second data item which identifies the respective product, each of certain ones of said data blocks including in the first data record a flag indicative that the respective product is normally sold as a multi-item package, and including a plurality of second data records in each of which are included the relevant second data item, a third data item representing a respective number of items in a package, and a fourth data item representing the price of said respective number of items, the method including the following steps: (a) generating said first data item and the relevant second data item for a purchased product; (b) comparing the first and second data items gernerated in step (a) with the first and second data items of the first data records in said price look-up file; (c) upon finding a correct comparison in step (b), checking whether the relevant first data record includes said flag; (d) displaying on said display the price of the purchased product as stored in the relevant data block if said flag is not detected in step (c), and, if said flag is detected in step (c), providing an indication to the operator that the number of items included in the purchased product are to be entered in said cash register; (e) entering said number of items in said cash register by means of said keyboard in response to the provision of said indication in step (d); (f) generating the relevant third data item, as represented by the number entered in said keyboard in step (e), together with the relevant second data item; (g) comparing the second and third data items generated in step (f) with the second and third data items of the second data records in said price look-up file; and (h) upon finding a correct comparison in step (g) displaying on said display the price of the purchased product as stored in the relevant second data record.

### Brief Description of the Drawings

A method in accordance with the present invention will now be described by way of example with reference to the accompanying drawings, in which:

Fig. 1 is a perspective view of a electronic cash register used in a method in accordance with the present invention;

Fig. 2 is a plan view of the keyboard of the electronic cash register of Fig. 1;

Fig. 3 is a schematic block diagram of the electronic cash register of Fig. 1 employed in a checkout system for processing data pertaining to a purchased product, together with a separate optical scanner and a remotely located price look-up file;

Fig. 4 is a drawing illustrating a data block of the price look-up file in which are stored various data records relating to a multi-item package; and

Fig. 5 is a flow chart useful in explaining the method of the present invention.

Best Mode for Carrying Out the Invention

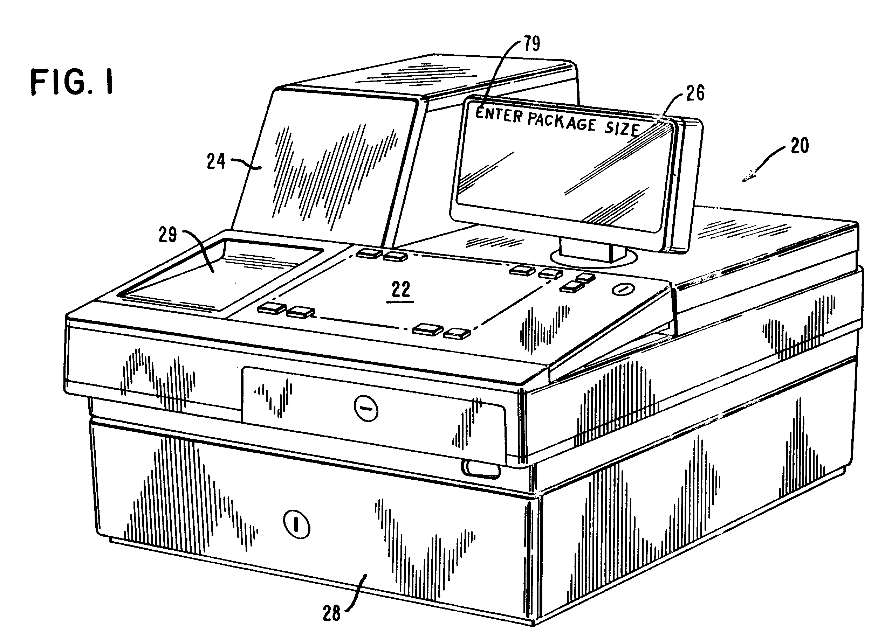

Referring now to Fig. 1, there is shown a perspective view of the electronic cash register used in the present invention generally indicated by the numeral 20, which includes a keyboard 22, a display 26 extending from the top of the cash register, a printer 24 mounted on the left side of the keyboard and a cash drawer 28 which forms a support for the cash register. Positioned adjacent the keyboard 22 and the printer 24 is a slot 29 through which a receipt record member (not shown) moves to a position for presentation to the customer at the conclusion of a merchandise checkout operation.

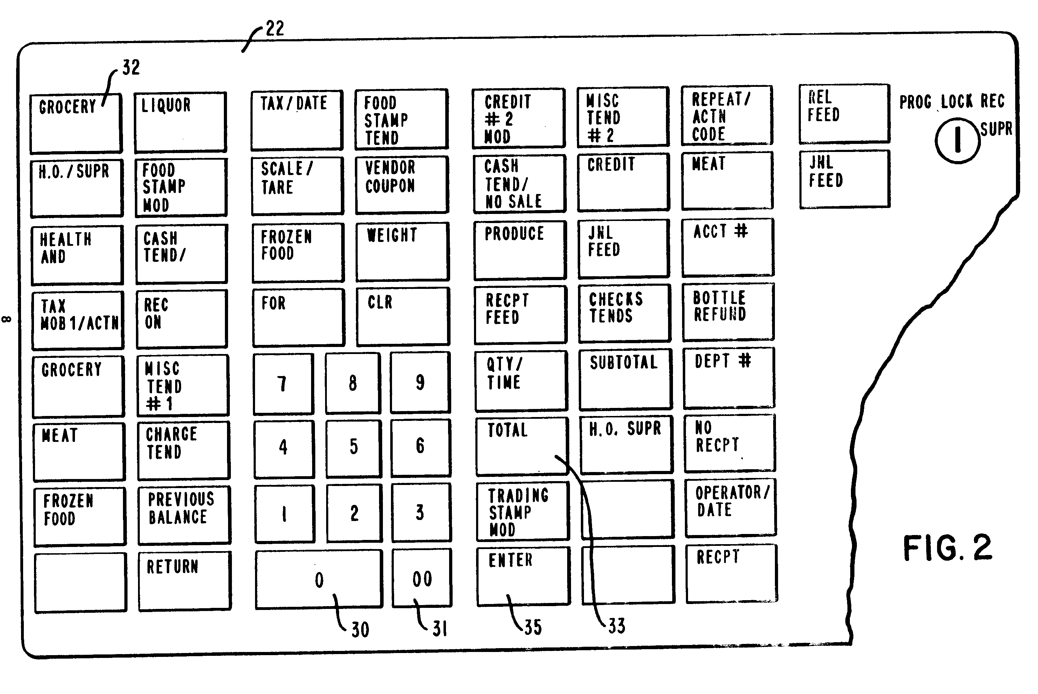

Referring now to Fig. 2, there is shown a plan view of the keyboard 22 which includes a 10-key portion 30 comprising a number of conventional keys on which are located indicia indicating the numbers 1-0. The 10-key keyboard further includes an additional key 31 on which is located a 00 indicium. The keyboard 22 also includes a number of transaction keys 32 which are used to identify the department from which the purchased merchandise originates together with other control keys 33 which are used to totalize the checkout operation. Included in the control keys is an Enter key 35 used to control the access to a price look-up file as will be described more fully hereinafter.

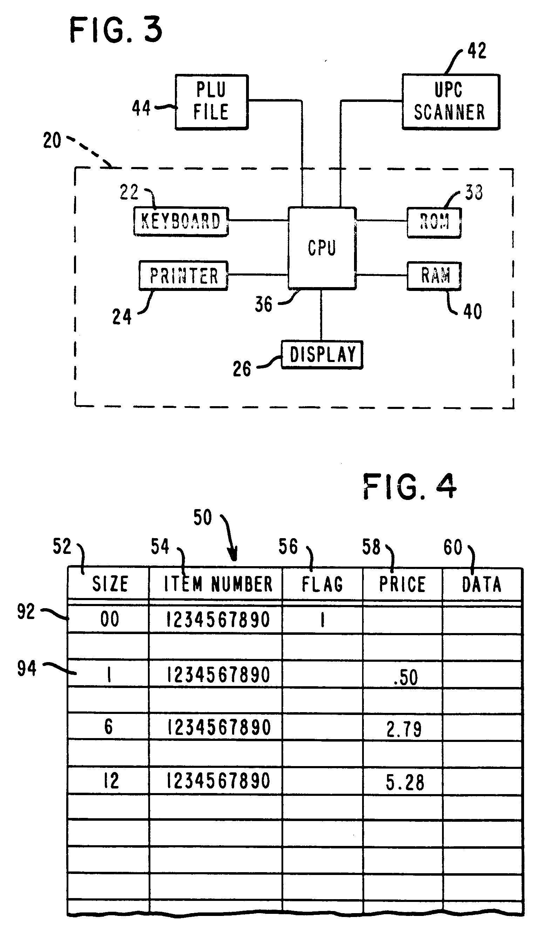

Referring now to Fig. 3, there is shown a block diagram of the electronic cash register 20 together with a remotely located price look-up file 44 and a UPC optical scanner 42 which interact with the cash register 20 to provide a checkout operation of purchased merchandise items in a supermarket. Included in the cash register 20 is a central processor unit (CPU) 36 which controls the printer 24 and the display 26. Associated with the CPU 36 is a ROM memory 38 in which is located the application software for operating the cash register 20 and a RAM memory unit 40 in which temporary totals are stored as part of the checkout operation. The price look-up file 44 has stored therein a plurality of data blocks each containing price information relating to a respective one of the products found in the supermarket. When found as part of a look-up operation, the price of a purchased product is transmitted to the CPU 36 for use in printing the price on a receipt member (not shown) by the printer 24 and displaying the price on the display 26 in a manner that is well known in the art. The UPC scanner 42 scans a UPC label located on the purchased product to generate data identifying the purchased product from which the price of the product is extracted from the PLU file 44 in a manner that is well known in the art. As will be described more fully hereinafter, the CPU 36 operates the display 26 in response to the program stored in the ROM memory unit 38 to control the type of data that is entered into the keyboard 22 by the operator.

Referring now to Fig. 4, there is illustrated a data block 50 of the price look-up file 44 (Fig. 3) showing the type of data that is stored in the file 44 in respect of a multi-item package. The first column 52 in the file 44 includes binary data representing the size or number of merchandise items, such as bottles of beer, which are normally sold as a multi-item package. In the next column 54, the item number identifying the merchandise items sold in such package is stored. In the next column 56, identified as the flag column, a flag represented by the binary number one is located in a first data record 92 of the data block 50 to indicate that the purchased product identified by the item number in column 54 is a multi-item package. After the first data record 92, the next and succeeding data records 94 in the data block 50 include the same item number as the record 92, but differ in that the size or number of items in a purchased package can be represented by any number from 1-99, and in that the price associated with such size is included in column 58. The last column 60 may contain any data necessary to the processing of the purchased product such as inventory control data. Each of the other data blocks which correspond to products which are not multi-item packages simply comprises a single data record corresponding to the data record 92 of data block 50 without the flag but including the relevant price in column 58; thus, each of these other data records includes a first data item representing the size number 00, a second data item identifying the respective product, and a further data item representing the price of the product.

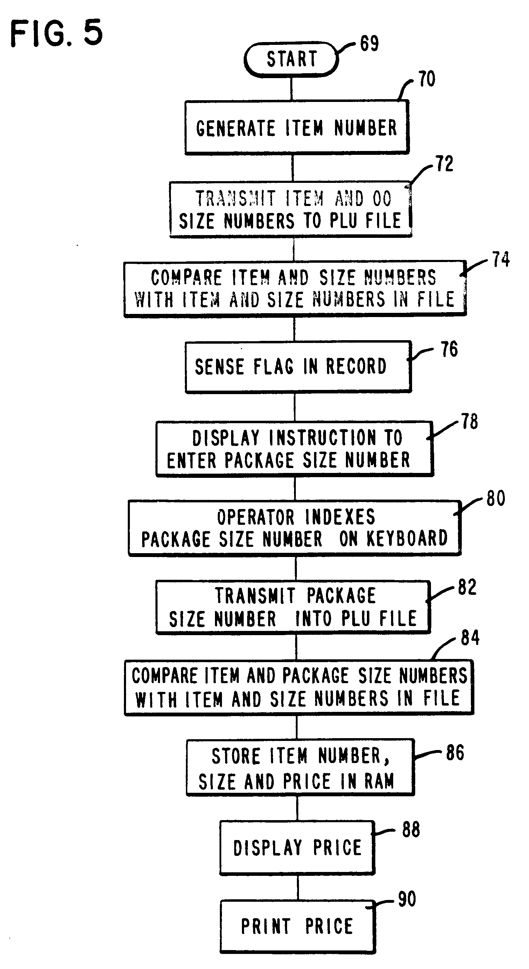

Referring now to Fig. 5, there is shown a flow chart of a checkout operation of the present invention which starts at the beginning of the operation (block 69) by the operator moving a purchased product past the optical scanner 42 (Fig. 3). The scanner 42 scans the UPC label on the package to generate a data item representing the item number identifying the product (block 70) for transmission to the CPU 36. The CPU 36 in response to receiving the item number data from the scanner 42 will transmit the item number to the PLU file 44. This transmission of the data to the file 44 is controlled by the actuation by the operator of the key 31 (Fig. 2) which appends the size number 00 to the item number identifying the product which is used to access the file 44. Thus, this item number together with the size number 00 are transmitted to the PLU file 44 (block 72). The item number and size number are compared with the numbers in columns 52 and 54 of the various data records in the file 44. After finding a correct comparison, the CPU 36 will check whether a binary one is stored in the flag column 56 of the relevant data record (block 76). In response to sensing a flag, the CPU 36 will enable the display 24 to display the logo 79 (Fig. 1) entitled "Enter Package Size" (block 78). If a flag is not sensed, the CPU 36 will simply cause the price of the relevant product to be displayed and printed in conventional manner. In response to the displaying of the logo 79, the operator enters the package size number (i.e. number of items in the package) in the cash register 20 utilizing the keys in the 10-key section 30 (Fig. 2), and then operates the Enter key 35 (block 80). In response to the entering of the size number in the cash register 20 and the operation of the key 35, the CPU will transmit the item number and the size number to the PLU file 44 (block 82) for comparison (block 84) with the numbers in columns 52 and 54 of the various data records in the file 44. After finding a correct comparison, the price of the purchased product based on the size number associated with the item number is then extracted from column 58 of the relevant data record 94 and is stored, together with the item and size numbers, in the RAM 40 (Fig. 3) or any other type of memory by the CPU unit 36 (block 86) for use in displaying the price (block 88) and for use in totalizing the total cost of the products purchased. In addition, the price and the number of items in the purchased multi-item package are printed on the receipt record member and the journal record member by the printer 24 (Fig. 1) (block 90).

It will be seen that the use of a flag to designate that a purchased product is a multi-item package, and instructing the operator to enter the number of items in such package reduces operator errors since the operator does not have to remember to preselect a modifying key to control a checkout operation.

## Claims

1. A method for processing data relating to purchased products utilizing an operator actuated electronic cash register (20) having a keyboard (22) and a display (26), and utilizing a price look-up file (44) in which are stored a plurality of data blocks each containing information relating to the price of a respective product, said data blocks being accessed in operation for the purpose of obtaining the price of a purchased product and displaying this price on said display, characterized in that each of said data blocks includes or consists of a first data record (92) in which are included a first data item which is the same for all the first data records, and a second data item which identifies the respective product, each of certain ones of said data blocks including in the first data record a flag indicative that the respective product is normally sold as a multi-item package, and including a plurality of second data records (94) in each of which are included the relevant second data item, a third data item representing a respective number of items in a package, and a fourth data item representing the price of said respective number of items, the method including the following steps: (a) generating said first data item and the relevant second data item for a purchased product; (b) comparing the first and second data items generated in step (a) with the first and second items of the first data records in said price look-up file (44); (c) upon finding a correct comparison in step (b), checking whether the relevant first data record includes said flag; (d) displaying on said display (26) the price of the purchased product as stored in the relevant data block if said flag is not detected in step (c), and, if said flag is detected in step (c), providing an indication to the operator that the number of items included in the purchased product are to be entered in said cash register (20); (e) entering said number of items in said cash register (20) by means of said keyboard (22) in response to the provision of said indication in step (d); (f) generating the relevant third data item, as represented by the number entered in said keyboard in step (e), together with the relevant second data item; (g) comparing the second and third data items generated in step (f) with the second and third data items of the second data records in said price look-up file; and (h) upon finding a correct comparison in step (g) displaying on said display the price of the purchased product as stored in the relevant second data record.

2. A method according to claim 1, characterized in that step (d) involves displaying instructions to the operator on said display (26) if said flag is detected in step (c).

3. A method according to either claim 1 or claim 2, characterized in that in step (a) said first data item is generated in response to operation of a special key (31) on said keyboard (22).

4. A method according to claim 3, characterized in that in step (f) the relevant second and third data items are generated in response to operation of a further key (35) on said keyboard (22).

5. A method according to any one of the preceding claims, characterized in that in step (a) said second data item is generated by utilizing a scanner (42) for reading a bar code on a label located on the purchased product.

6. A method according to any one of the preceding claims, characterized in that said cash register (20) includes a printer (24) which is arranged to print on a record member in step (h) the price of the purchased product together with the number of items in the purchased product as entered in said cash register in step (e).

**Patentansprüche**

1. Verfahren zum Verarbeiten von sich auf gekaufte Produkte beziehenden Daten unter Verwendung einer von einem Bediener betätigten elektronischen Registrierkasse (20), die ein Tastenfeld (22) und eine bezeige (26) besitzt, und Verwenden einer Preisaufrufdatei (44), in der eine Vielzahl von jeweils den Preis eines entsprechenden Produkts betreffende Informationen enthaltende Datenblöcke gespeichert sind, wobei auf die Datenblöcke im Betrieb zugegriffen wird, um den Preis eines gekauften Produkts zu erhalten und diesen Preis auf der bezeige anzuzeigen, dadurch gekennzeichnet, daß jeder Datenblock enthält oder besteht aus einem ersten Dateneintrag (92), in dem ein erster Datenwert enthalten ist, der der gleiche ist für alle ersten Dateneinträge, und einem zweiten Datenwert, der das entsprechende Produkt identifiziert, wobei jeder gewisser Datenblöcke in dem ersten Dateneintrag eine Markierung enthält, die anzeigt, daß das entsprechende Produkt normalerweise als eine Vielfachpackung verkauft wird, und eine Vielzahl von zweiten Dateneinträgen (94) enthält, in denen jeweils der relevante zweite Datenwert einen eine entsprechende Anzahl von Artikeln in einer Packung darstellenden dritten Datenwert und einen den Preis der entsprechenden Anzahl von Artikeln darstellenden vierten Datenwert enthält, wobei das Verfahren die folgenden Schritte einschließt: (a) Erzeugen des ersten Datenwertes und des relevanten zweiten Datenwertes für ein verkauftes Produkt; (b) Vergleichen der im Schritt (a) erzeugten ersten und zweiten Datenwerte mit den ersten und zweiten Werten der ersten Dateneinträge in der Preisaufrufdatei (44); (c) nach Auffinden eines richtigen Vergleichs in Schritt (b) Prüfen, ob der relevante erste Dateneintrag die Markierung enthält; (d) Anzeigen des Preises des verkauften Produkts, wie er in dem relevanten Datenblock gespeichert ist, auf der Anzeige (26), wenn im Schritt (c) die Markierung nicht festgestellt wird, und, wenn die Markierung in Schritt (c) festgestellt wurde, Abgeben einer Anzeige an den Bediener, daß die Anzahl von Artikeln in dem gekauften Produkt in die Registrierkasse (20) einzugeben ist; (e) Eingeben der Anzahl von Artikeln in die Registrierkasse (20) mittels des Tastenfelds (22) unter Ansprechen auf die Abgabe der Anzeige in Schritt (d); (f) Erzeugen des relevanten dritten Datenwertes, wie er durch die im Tastenfeld in Schritt (e) eingegebene Anzahl dargestellt wird, zusammen mit dem relevanten zweiten Datenwert; (g) Vergleichen des im Schritt (f) erzeugten zweiten und dritten Datenwerts mit dem zweiten und dritten Datenwert der zweiten Dateneinträge in der Preisaufrufdatei; und (h) nach Auffinden des korrekten Vergleichs in Schritt (g) Anzeigen des Preises des verkauften Produkts auf der Anzeige, wie es in dem relevanten zweiten Dateneintrag gespeichert ist.

2. Verfahren nach Anspruch 1, dadurch gekennzeichnet, daß Schritt (d) Anzeigen von Befehlen für den Bediener auf der Anzeige (26) umfaßt, wenn in Schritt (c) die Markierung festgestellt wird.

3. Verfahren nach Anspruch 1 oder Anspruch 2, dadurch gekennzeichnet, daß in Schritt (a) der erste Datenwert unter Ansprechen auf die Betätigung einer speziellen Taste (31) auf dem Tastenfeld (22) erzeugt wird.

4. Verfahren nach Anspruch 3, dadurch gekennzeichnet, daß in Schritt (f) die relevanten zweiten und dritten Datenwerte unter Ansprechen auf die Betätigung einer weiteren Taste (35) auf dem Tastenfeld (22) erzeugt werden.

5. Verfahren nach einem der vorhergehenden Ansprüche, dadurch gekennzeichnet, daß in Schritt (a) der zweite Datenwert unter Verwendung eines Abtasters (42) zum Lesen einer Strichkodierung auf einem auf dem gekauften Produkt angebrachten Etikett erzeugt wird.

6. Verfahren nach einem der vorhergehenden Ansprüche, dadurch gekennzeichnet, daß die Registrierkasse (20) einen Drucker (24) aufweist, der dazu dient, auf einem Aufzeichnungsträger in Schritt (h) den Preis des gekauften Produkts zusammen mit der Anzahl von Artikeln in dem gekauften Produkt zu drucken, wie es in Schritt (e) in die Registrierkasse eingegeben,wurde.

**Revendications**

1. Procédé de traitement de données concernant des produits achetés au moyen d'une caisse-enregistreuse électronique (20) actionnée par un opérateur et ayant un clavier (22) et un visuel (26), et utilisant un fichier (44) de consultation de prix dans lequel sont stockés plusieurs blocs de données contenant chacun une information concernant le prix d'un produit respectif, lesdits blocs de données étant accédés, lors d'une opération, pour l'obtention du prix d'un produit acheté et l'affichage de ce prix sur ledit visuel, caractérisé en ce que chacun desdits blocs de données comprend, ou est constitué de, un premier enregistrement (92) de données dans lequel sont inclus un premier élément de données qui est le même pour tous les premiers enregistrements de données, et un deuxième élément de données qui identifie le produit respectif, chacun de certains desdits blocs de données comprenant, dans le premier enregistrement de données, un drapeau indiquant que le produit respectif est normalement vendu sous la forme d'un emballage d'articles multiples, et comprenant plusieurs seconds enregistrements de données (94) dans chacun desquels sont inclus le deuxième élément de données concerné, un troisième élément de données représentant un nombre respectif d'articles dans un emballage, et un quatrième élément de données représentant le prix dudit nombre respectif d'articles, le procédé comprenant l'étape suivante qui consiste : (a) à générer ledit premier élément de données et le deuxième élément de données associé pour un article acheté ; (b) à comparer les premier et deuxième éléments de données générés dans l'étape (a) aux premier et deuxième éléments des premiers enregistrements de données dans ledit fichier (44) de consultation de prix ; (c) une fois qu'une comparaison correcte est trouvée à l'étape (b), à vérifier si le premier enregistrement de données associé comprend ledit drapeau ; (d) à afficher sur ledit visuel (26) le prix du produit acheté tel que stocké dans le bloc de données concerné si ledit drapeau n'est pas détecté à l'étape (c) et, si ledit drapeau est détecté à l'étape (c), à indiquer à l'opérateur d'introduire dans ladite caisse-enregistreuse (20) le nombre d'articles inclus dans le produit acheté ; (e) à introduire ledit nombre d'articles dans ladite caisse-enregistreuse (20) au moyen dudit clavier (22) en réponse à la présence de ladite indication dans l'étape (d) ; (f) à générer le troisième élément de données concerné, tel que représenté par le nombre introduit dans ledit clavier lors de l'étape (e), ainsi que le deuxième élément de données concerné ; (g) à comparer les deuxième et troisième éléments de données générés dans l'étape (f) aux deuxième et troisième éléments de données des seconds enregistrements de données dans ledit fichier de consultation de prix ; et (h) lorsqu'une comparaison correcte est trouvée dans l'étape (g), à afficher sur ledit visuel le prix du produit acheté tel que stocké dans le second enregistrement de données concerné.

2. Procédé selon la revendication 1, caractérisé en ce que l'étape (d) comprend l'affichage d'instructions pour l'opérateur sur ledit visuel (26) si ledit drapeau est détecté dans l'étape (c).

3. Procédé selon la revendication 1 ou la revendication 2, caractérisé en ce que, dans l'étape (a), ledit premier élément de données est généré en réponse à une manoeuvre d'une touche spéciale (31) sur ledit clavier (22).

4. Procédé selon la revendication 3, caractérisé en ce que, dans l'étape (f), les deuxième et troisième éléments de données concernés sont générés en réponse à une manoeuvre d'une autre touche (35) sur ledit clavier (22).

5. Procédé selon l'une quelconque des revendications précédentes, caractérisé en ce que, dans l'étape (a), ledit deuxième élément de données est généré par l'utilisation d'un analyseur (42) destiné à lire un code à barres sur une étiquette placée sur le produit acheté.

6. Procédé selon l'une quelconque des revendications précédentes, caractérisé en ce que ladite caisse-enregistreuse (20) comprend une imprimante (24) qui est agencée de façon à imprimer sur un élément d'enregistrement, dans l'étape (h), le prix du produit acheté ainsi que le nombre d'articles dans le produit acheté, tels qu'introduits dans ladite caisse enregistreuse dans l'étape (e).

FIG. 1

ENTER PACKAGE SIZE

EP 0 322 442 B1

FIG. 2

EP 0 322 442 B1

# FIG. 3

PLU FILE 44

UPC SCANNER 42

20

KEYBOARD 22

CPU

ROM 33

PRINTER 24

36

RAM 40

DISPLAY 26

# FIG. 4

50

| | 52 | 54 | 56 | 58 | 60 |
|---|---|---|---|---|---|
| | SIZE | ITEM NUMBER | FLAG | PRICE | DATA |
| 92 | 00 | 1234567890 | 1 | | |
| | | | | | |
| 94 | 1 | 1234567890 | | .50 | |
| | | | | | |
| | 6 | 1234567890 | | 2.79 | |
| | | | | | |
| | 12 | 1234567890 | | 5.28 | |
| | | | | | |
| | | | | | |
| | | | | | |
| | | | | | |

# FIG. 5

START — 69

GENERATE ITEM NUMBER — 70

TRANSMIT ITEM AND 00 SIZE NUMBERS TO PLU FILE — 72

COMPARE ITEM AND SIZE NUMBERS WITH ITEM AND SIZE NUMBERS IN FILE — 74

SENSE FLAG IN RECORD — 76

DISPLAY INSTRUCTION TO ENTER PACKAGE SIZE NUMBER — 78

OPERATOR INDEXES PACKAGE SIZE NUMBER ON KEYBOARD — 80

TRANSMIT PACKAGE SIZE NUMBER INTO PLU FILE — 82

COMPARE ITEM AND PACKAGE SIZE NUMBERS WITH ITEM AND SIZE NUMBERS IN FILE — 84

STORE ITEM NUMBER, SIZE AND PRICE IN RAM — 86

DISPLAY PRICE — 88

PRINT PRICE — 90